# EUROPÄISCHE PATENTSCHRIFT

(11) **EP 1 878 617 B1**
(45) Veröffentlichungstag und Bekanntmachung des Hinweises auf die Patenterteilung: **20.01.2010**
(21) Anmeldenummer: 07012641.2
(22) Anmeldetag: 28.06.2007
(51) Int. Cl.: B60R 5/04

(54) **Abdeckung für einen Gepäckraum**
Cover for a boot
Recouvrement pour un coffre à bagages

(30) Priorität: 14.07.2006 DE 102006032807
(43) Veröffentlichungstag der Anmeldung: 16.01.2008
(73) Patentinhaber: Dr. Ing. h.c. F. Porsche Aktiengesellschaft, 70435 Stuttgart (DE)
(72) Erfinder: Hofmann, Peter, 75242 Neuhausen (DE)

(56) Entgegenhaltungen:
- DE-A1- 3 512 974
- FR-A- 2 588 809
- FR-A- 2 848 939
- JP-A- 4 237 649

## Beschreibung

Die vorliegende Erfindung betrifft eine Abdeckung für einen im Fahrgastraum eines Kraftfahrzeugs zwischen einer Rückenlehne und einer Heckklappe befindlichen Gepäckraum, gemäß dem Oberbegriff des Anspruchs 1.

Aus der DE 35 12 974 C2 ist eine Abdeckung für einen im Fahrgastraum eines Fahrzeugs zwischen einer Rücksitzlehne und einer Heckklappe befindlichen Gepäckraum bekannt, wobei die Abdeckung wannenförmig ausgebildet ist und sich mit den Wannenrändern am Fahrzeug abstützt. Um ein Volumen des Gepäckraumes variieren zu können, ist die Abdeckung wahlweise mit ihrer Öffnung nach oben oder nach unten einbaubar, so dass in beiden Einbaulagen ein Inneres des Gepäckraumes verdeckt ist. Die Abdeckung kann somit um eine in Fahrzeugquerrichtung verlaufende Achse um ca. 180° verdreht wahlweise in einer ersten oder in einer zweiten Einbaulage eingebaut werden.

Aus der DE 100 07 137 A1 ist eine Vorrichtung zur Unterbringung und zum Transport von Gegenständen im Gepäckraum eines Personenkraftwagens bekannt, bei dem ein aus zwei seitlichen und quer verlaufenden Rahmenteilen gebildeter Rahmen an seinen beiden seitlichen Rahmenteilen im Gepäckraum abstützbar ist. Der Rahmen dient dabei als Träger für einen oder mehrere Behälter zur Aufnahme von Gegenständen. In den Rahmen können unterschiedliche Arten von Behältern, Netzen oder andersartige Böden eingesetzt werden.

Aus der FR 2 834 677 ist eine abnehmbare Hutablage für ein Kraftfahrzeug bekannt, welche einerseits eine Wanne bildet und andererseits in zwei unterschiedlichen, jeweils um 180° gedrehten, Einbaulagen einbaubar ist. Dabei ist die abnehmbare Hutablage in beiden Einbaulagen mit ihren seitlichen Rändern in zugehörigen und fahrzeugseitig angeordneten Schienen geführt.

Weitere Abdeckungen sind beispielweise aus der DE 20 2005 009 428 U1 , der FR 258 8 809 und der FR 2 848 939 bekannt.

Nachteilig bei den bekannten Abdeckungen ist oftmals, dass diese umständlich in ihre unterschiedlichen Einbaulagen eingebaut, insbesondere eingeschoben, werden müssen.

Die vorliegende Erfindung beschäftigt sich mit dem Problem, für eine Abdeckung der gattungsgemäßen Art eine verbesserte Ausführungsform anzugeben, welche einfach in beiden Einbaulagen einbaubar ist und zugleich in beiden Einbaulagen einen einfachen Zugang zum darunter liegenden Gepäckraum ermöglicht.

Dieses Problem wird erfindungsgemäß wird durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, eine Wendehutablage zu schaffen, die zwischen einer Rückenlehne und einer Heckklappe in zwei unterschiedlichen Einbaulagen einbaubar ist und die in beiden Einbaulagen um ihren vorderen Rand schwenkbar am Kraftfahrzeug gelagert und mit ihrem hinteren Rand mit der Heckklappe wirkverbindbar ist. Die schwenkbare Lagerung um den vorderen Rand der Abdeckung verbunden mit der Kopplung des hinteren Randes der Abdeckung mit der Heckklappe erlaubt dabei, dass sich die Abdeckung unabhängig von ihrer Einbaulage simultan mit der Heckklappe öffnen lässt und dadurch einen Zugang zum darunter befindlichen Gepäckraum freigibt. Ein Umbau zwischen den beiden Einbaulagen ist dabei schnell und einfach durchzuführen, so dass ein Kofferraumvolumen leicht an geänderte Anforderungen angepasst werden kann. Die beiden sich gegenüberliegenden Ränder der Abdeckung, also der vordere und der hintere Rand, sind dabei so ausgebildet, dass sie zusammen mit einer entsprechend gestalteten, fahrzeugseitigen Aufnahme ein Scharnier bilden.

Bei einer vorteilhaften Ausführungsform der erfindungsgemäßen Lösung weist die Abdeckung einen J-förmigen Längsschnitt mit einem abgebogenen Endbereich auf. Dieser abgebogene Endbereich bewirkt zum einen eine zusätzliche Aussteifung der Abdeckung und zum anderen ein je nach gewählter Einbaulage deutlich unterschiedlich großes Gepäckraumvolumen. In der ersten Einbaulage ist dabei der abgebogene Endbereich an einem in Fahrtrichtung hinteren Ende der Abdeckung gelegen und weist gleichzeitig nach oben in Richtung der Heckklappe, so dass den Fahrzeuginsassen ein deutlich größeres Innenraumgefühl vermittelt werden kann, während in der zweiten Einbaulage der abgebogene Endbereich an einem vorderen Rand der Abdeckung angeordnet ist und nach unten weist, wodurch der unter der Abdeckung liegende Gepäckraum deutlich vergrößert werden kann.

Zweckmäßig weist die Abdeckung am, dem abgebogenen Endbereich gegenüberliegenden Randbereich einen zu letzterem in entgegengesetzter Richtung abgebogenen Rand auf. Dabei sind beide Ränder so ausgebildet, dass sie in ihrer jeweils zugehörigen Einbaulage in eine fahrzeugseitige Rinne eingreift und dadurch ein Scharnier mit der fahrzeugseitigen Rinne bilden. Die beiden Ränder der Abdeckung bilden somit ein Wechselscharnier für die Abdeckung.

Bei einer vorteilhaften Weiterbildung der erfindungsgemäßen Lösung stützt sich die Abdeckung unabhängig von ihrer Einbaulage zumindest punktuell an ihren seitlichen Rändern am Kraftfahrzeug ab. Dies bietet den Vorteil, dass sich die Abdeckung sowohl in ihrer ersten als in ihrer zweiten Einbaulage an drei Rändern am Kraftfahrzeug abstützt und dadurch einerseits schwingungsarm am Kraftfahrzeug aufliegt und andererseits insbesondere in ihrer ersten Einbaulage ein gefahrloses Ablegen von Gegenständen auf der Abdeckung erlaubt.
Zweckmäßig weist die Abdeckung zumindest eine wannenartige Vertiefung auf. Diese wannenartige Vertiefung ist in der ersten Einbaulage der Abdeckung nach unten, d.h. zum Gepäckraum hin, geschlossen, so dass in dieser ersten Einbaulage zumindest kleinere Gegenstände, gegen ein Verrutschen gesichert, in der Vertiefung transportiert werden können. In der zweiten Einbaulage hingegen, vergrößert die wannenartige Vertiefung das unter der Abdeckung zur Verfügung stehende Gepäckraumvolumen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch ein Kraftfahrzeug mit einer erfindungsgemäßen Abdeckung,
- Fig. 2a: eine Ansicht auf eine hintere Sitzreihe eines Kraftfahrzeugs mit einer Abdeckung in deren erster Einbaulage,
- Fig. 2b: eine Darstellung wie in Fig. 2a, jedoch mit einer Abdeckung in deren zweiter Einbaulage.

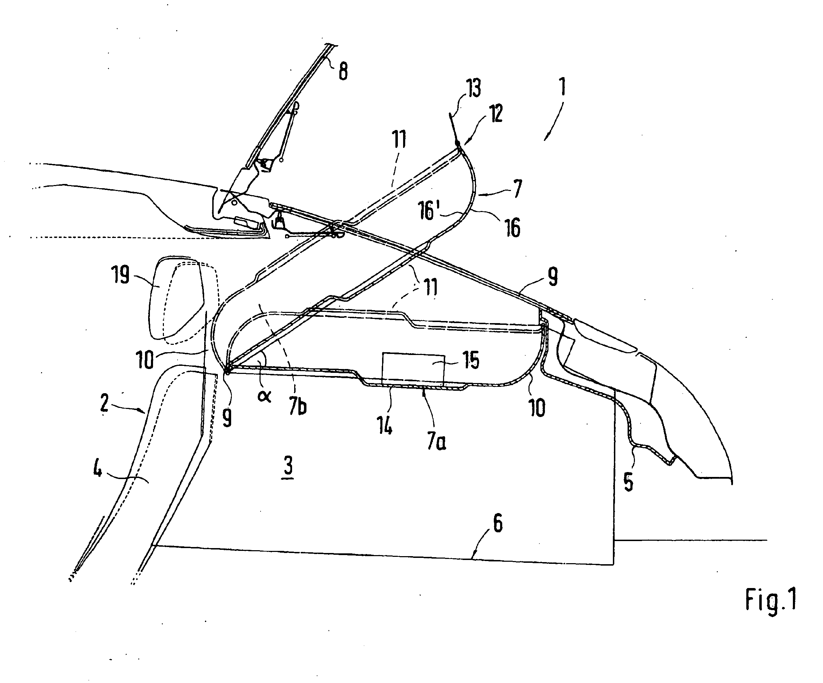

Entsprechend Fig. 1 weist ein Kraftfahrzeug 1, wovon lediglich ein hinterer Endbereich dargestellt ist, eine hintere Sitzreihe 2 mit einem in Fahrtrichtung dahinter angeordneten Gepäckraum 3 auf. Der Gepäckraum 3 erstreckt sich somit in Längsrichtung des Kraftfahrzeugs 1 zwischen einer Sitzlehne 4 der hinteren Sitzreihe 2 und einer hinteren Innenverkleidung 5 des Gepäckraums 3. In vertikaler Richtung erstreckt sich der Gepäckraum 3 von einem unteren Gepäckraumboden 6 bis zu einer, den Gepäckraum 3 nach oben grenzenden Abdeckung 7.

Dabei kann die Abdeckung 7 erfindungsgemäß entweder in einer ersten Einbaulage 7a oder in einer zweiten Einbaulage 7b eingebaut werden. Die erste Einbaulage 7a ist dabei gemäß der Fig. 1 mit durchgezogener Linie dargestellt, während die zweite Einbaulage 7b mit unterbrochen gezeichneter Linie dargestellt ist. In der ersten Einbaulage 7a ist eine Fahrgastinnenraumgröße größer und ein Abstand zwischen der Abdeckung 7 und einer darüber angeordneten Heckklappe 8 größer. Es wird dadurch ein angenehmes und großzügiges Innenraumgefühl vermittelt.

Demgegenüber ist bei in zweiten Einbaulage 7b eingebauter Abdeckung 7 das sich unterhalb der Abdeckung 7 befindliche Volumen des Gepäckraums 3 vergrößert. Ein Wechsel zwischen den beiden Einbaulagen 7a und 7b kann durch eine Verdrehung der Abdeckung 7 um eine in Fahrzeugquerrichtung verlaufende Achse um 180° erreicht werden. Erfindungsgemäß ist die Abdeckung 7 unabhängig von der gewählten Einbaulage 7a oder 7b um einen in Fahrtrichtung gesehenen vorderen Rand 9 der Abdeckung 7 verschwenkbar am Kraftfahrzeug 1 gelagert und an ihrem hinteren Rand 12 mit der Heckklappe 8 wirkungsverbunden. Darüber hinaus ist die Abdeckung 7 vorzugsweise plattenförmig ausgebildet.

Das unterschiedliche Gepäckraumvolumen des Gepäckraums 3 bei unterschiedlicher Einbaulage 7a oder 7b resultiert aus einem J-förmigen Längsschnitt der Abdeckung 7 mit einem abgebogenen Endbereich 10. In der ersten Einbaueinlage 7a ist der abgebogene Endbereich 10 in Fahrtrichtung gesehen hinten, während dieser abgebogene Endbereich 10 in der Einbaulage 7b in Fahrtrichtung gesehen vorne angeordnet ist. Je nach Einbaulage 7a oder 7b ist auch ein im wesentlichen gerader Abschnitt 11 der Abdeckung 7 entweder tiefer oder höher angeordnet, wodurch das Gepäckraumvolumen des Gepäckraums 3 beeinflusst wird. Wie der Fig. 1 weiter zu entnehmen ist, weist die Abdeckung 7 am, dem abgebogenen Endbereich 10 gegenüberliegenden Rand einen in entgegengesetzter Richtung abgebogenen Rand auf, der bei der Einbaulage 7a den vorderen Rand 9 bildet, während er bei der Einbaulage 7b den hinteren Rand 12 der Abdeckung 7 bildet. Beide Ränder 9,12 sind dabei so ausgebildet, dass sie mit einer vorzugsweise komplementär dazu ausgebildeten Rinne am Fahrzeug zusammenwirken und dadurch eine Scharnierfunktion mit dem Kraftfahrzeug 1 bilden. Unabhängig von seiner Einbaulage 7a oder 7b kann dadurch die Abdeckung 7 an ihren vorderen Rand 9 um eine in Fahrzeugquerrichtung verlaufenden Achse, die gemäß Fig. 1 im wesentlichen orthogonal zur Bildebene verläuft, verschwenkt werden.

An ihrem hinteren Rand 12 ist die Abdeckung 7 unabhängig von ihrer Einbaulage 7a oder 7b über Zugelemente 13 mit der Heckklappe 8 verbunden, so dass ein Öffnen der Heckklappe 8 auch ein Öffnen der Abdeckung 7, d.h. ein Verschwenken derselben um ihren vorderen Rand 9 bewirkt. Bei geschlossener Heckklappe 8 ist auch die Abdeckung 7 in einer Stellung, in welcher sie den Gepäckraum 3 nach oben abschließt, während bei geöffneter Heckklappe 8 und geöffneter Abdeckung 7 von letzterer eine den Gepäckraum 3 zugänglich machende Beladöffnung freigegeben wird. Bei mit der Heckklappe 8 verbundenen Zugelementen 13 wird die Abdeckung 7 zwischen geschlossener und geöffneter Heckklappe 8 um einen Drehwinkel □ von ca. 35° verschwenkt, was bei geöffneter Heckklappe 8 und verschwenkter Abdeckung 7 eine lichte Weite einer Beladungsöffnung von zumindest 580 mm ergibt. Dabei ist die lichte Weite der Beladeöffnung bei sich in Einbaulage 7b befindlicher Abdeckung 7 gemäß Fig. 1 größer als bei sich in Einbaulage 7a befindlicher Abdeckung 7.

Ebenfalls der Fig. 1 zu entnehmen ist, dass die Abdeckung 7 im Bereich ihres im wesentlichen geraden Abschnitts 11 eine kleine wannenartige Vertiefung 14 aufweist, welche in der Einbaulage 7a nach unten geschlossen ist und dabei ein Verrutschen von auf der Abdeckung 7 gelagerten Gegenständen 15 zumindest erschwert.

Selbstverständlich ist auch denkbar, dass sich gegenüberliegende Seiten 16 und 16', das heißt Oberflächen der Abdeckung 7 unterschiedlich ausgebildet bzw. gestaltet sind, so dass sich je nach Einbaulage 7a oder 7b ein unterschiedliches Design ergibt.

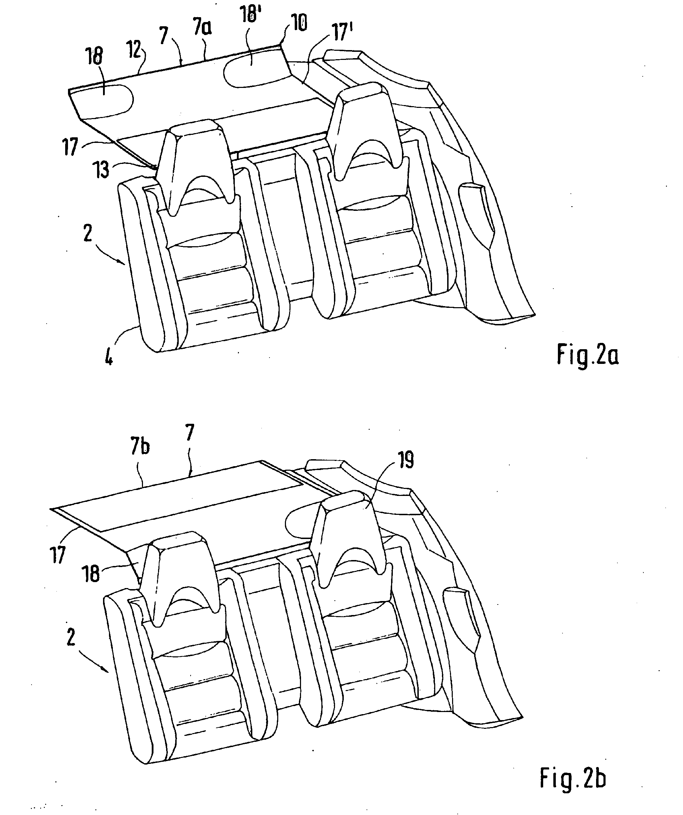

In Fig. 2a ist die Abdeckung 7 in ihrer ersten Einbaulage 7a gezeigt, bei welcher ein Fahrgastraum im Vergleich zur in Fig. 2b gezeigten, zweiten Einbaulage 7b größer ist. Demgegenüber ist der unterhalb der Abdeckung 7 angeordnete Gepäckraum 3 in der in Fig. 2b gezeigten Einbaulage 7b der Abdeckung 7 größer als in Fig. 2a. Desweiteren kann den Fig. 2a und 2b entnommen werden, dass im abgebogenen Endbereich 10 der Abdeckung 7 Dellen 18 und 18' vorgesehen sind, wobei diese Dellen 18, 18' in der Einbaulage 7b gemäß der Fig. 2b so angeordnet sind, dass eine Öffnungsbewegung der Abdeckung 7 durch Kopfstützen 19 nicht behindert wird.

In Fig. 2a ist die Abdeckung 7 - wie oben erwähnt - in ihrer ersten Einbaulage 7a gezeigt, bei welcher der abgebogene Endbereich 10 in Fahrtrichtung gesehen hinten, d.h. in von der Sitzlehne 4 entfernter Lage angeordnet ist und in Richtung der Heckklappe 8 weist, so dass eine Ablage von Gegenständen 15 auf der Abdeckung 7 möglich ist. Dabei ist die Abdeckung 7 zumindest punktuell entlang ihrer seitlichen Ränder 17, 17' am Kraftfahrzeug 1 gelagert, wodurch eine zuverlässige Abstützung der Abdeckung 7 erreicht wird und Verformungen der Abdeckung 7 selbst bei einem Ablegen von schwereren Gegenständen 15 auf der Abdeckung 7 begrenzt wird. Eine ähnliche Abstützung der Abdeckung 7 ist auch in deren zweiter Einbaulage 7b vorgesehen.

## Patentansprüche

1. Abdeckung (7) für einen zwischen einer Rückenlehne (4) und einer Heckklappe (8) eines Kraftfahrzeugs (1) befindlichen Gepäckraum (3), wobei die Abdeckung (7) in zwei Einbaulagen (7a, 7b) einbaubar ist, nämlich in einer ersten Einbaulage (7a), in welcher eine Oberfläche der Abdeckung (7) nach oben weist und in einer zweiten Einbaulage (7b), in welcher die Abdeckung (7) um eine in Fahrzeugquerrichtung verlaufende Achse um ca. 180° gedreht ist, so dass die Oberseite nunmehr nach unten weist; **dadurch gekennzeichnet, dass** die Abdeckung (7) unabhängig von der gewählten Einbaulage (7a, 7b)
- um einen in Fahrtrichtung gesehenen, vorderen Rand (9; 12) verschwenkbar am Kraftfahrzeug (1) gelagert ist,
- an einem in Fahrtrichtung gesehenen, hinteren Rand (12, 9) mit der Heckklappe (8) wirkverbindbar ist.

2. Abdeckung nach Anspruch 1, **dadurch gekennzeichnet, dass** die Abdeckung (7) einen J-förmigen Längsschnitt mit einem abgebogenen Endbereich (10) aufweist.

3. Abdeckung nach Anspruch 2, **dadurch gekennzeichnet, dass** die Abdeckung (7) am, dem abgebogenen Endbereich (10) gegenüberliegenden Randbereich einen zu letzterem in entgegengesetzter Richtung abgebogenen Rand aufweist.

4. Abdeckung nach einem der Ansprüche 1 bis 3, **dadurch gekennzeichnet, dass** sich die Abdeckung (7) unabhängig von ihrer Einbaulage (7a, 7b) zumindest punktuell an ihren seitlichen Rändern (17, 17') am Kraftfahrzeug (1) abstützt.

5. Abdeckung einem der Ansprüche 1 bis 4, **dadurch gekennzeichnet, dass** die Abdeckung (7) unabhängig von ihrer Einbaulage (7a, 7b) an ihrem hinteren Rand (12) über Zugelemente (13) mit der Heckklappe (8) verbunden ist.

6. Abdeckung nach einem der Ansprüche 1 bis 5, **dadurch gekennzeichnet, dass** die Abdeckung (7) zumindest eine wannenartige Vertiefung (14) aufweist.

7. Abdeckung nach einem der Ansprüche 1 bis 6, **dadurch gekennzeichnet, dass** die Abdeckung (7) bei geöffneter Heckklappe (8) um ca. 35° im Vergleich zur geschlossenen Heckklappe (8) um ihren vorderen Rand (10) verschwenkbar ist.

8. Abdeckung nach einem der Ansprüche 1 bis 7, **dadurch gekennzeichnet, dass** bei geöffneter Heckklappe (8) und verschwenkter Abdeckung (7) eine lichte Weite einer Beladeöffnung zumindest 580 mm beträgt.

## Claims

1. Covering (7) for a luggage compartment (3) situated between a backrest (4) and a tailgate (8) of a motor vehicle (1), wherein the covering (7) can be fitted in two fitting positions (7a, 7b), namely in a first fitting position (7a), in which a surface of the covering (7) faces upward, and in a second fitting position (7b), in which the covering (7) is rotated through approx. 180° about an axis running in the transverse direction of the vehicle such that the upper side now faces downward, **characterized in that**, irrespective of the selected fitting position (7a, 7b), the covering (7)
- is mounted on the motor vehicle (1) in a manner such that it can pivot about a front edge (9, 12), as seen in the direction of travel,
- can be operatively connected to the tailgate (8) at a rear edge (12, 9), as seen in the direction of travel.

2. Covering according to Claim 1, **characterized in that** the covering (7) has a J-shaped longitudinal section with a bent-over end region (10).

3. Covering according to Claim 2, **characterized in that** the covering (7), on the edge region opposite the bent-over end region (10), has an edge which is bent over in the opposite direction with respect to said edge region.

4. Covering according to one of Claims 1 to 3, **characterized in that**, irrespective of its fitting position (7a, 7b), the covering (7) is supported at least in punctiform manner at its lateral edges (17, 17') on the motor vehicle (1).

5. Covering according to one of Claims 1 to 4, **characterized in that**, irrespective of its fitting position (7a, 7b), the covering (7) is connected at its rear edge (12) to the tailgate (8) via tension elements (13).

6. Covering according to one of Claims 1 to 5, **characterized in that** the covering (7) has at least one trough-like depression (14).

7. Covering according to one of Claims 1 to 6, **characterized in that**, when the tailgate (8) is open, the covering (7) can be pivoted about its front edge (9) through approx. 35° in comparison to the closed tailgate (8).

8. Covering according to one of Claims 1 to 7, **characterized in that**, when the tailgate (8) is open and the covering (7) pivoted, a clear width of loading opening is at least 580 mm.

## Revendications

1. Recouvrement (7) pour un coffre à bagages (3) situé entre un dossier (4) et un hayon arrière (8) d'un véhicule à moteur (1), dans lequel le recouvrement (7) peut être monté dans deux positions de montage (7a, 7b), à savoir dans une première position de montage (7a) dans laquelle une face supérieure du recouvrement (7) est orientée vers le haut et dans une deuxième position de montage (7b) dans laquelle le recouvrement (7) est tourné d'environ 180° autour d'un axe s'étendant dans la direction transversale du véhicule, de telle manière que la face supérieure soit à présent orientée vers le bas, **caractérisé en ce que** le recouvrement (7), indépendamment de la position de montage choisie (7a, 7b),
- est monté sur le véhicule à moteur (1) de façon pivotante autour d'un bord avant (9; 12), vu dans la direction de déplacement,
- peut être activement relié au hayon arrière (8) par un bord arrière (12, 9), vu dans la direction de déplacement.

2. Recouvrement selon la revendication 1, **caractérisé en ce que** le recouvrement (7) présente une coupe longitudinale en forme de J avec une zone d'extrémité courbée (10).

3. Recouvrement selon la revendication 2, **caractérisé en ce que** le recouvrement (7) présente, sur la zone de bord opposée à la zone d'extrémité courbée (10), un bord courbé dans la direction opposée.

4. Recouvrement selon l'une quelconque des revendications 1 à 3, **caractérisé en ce que** le recouvrement (7) s'appuie sur le véhicule (1), au moins ponctuellement sur ses bords latéraux (17, 17'), indépendamment de sa position de montage (7a, 7b).

5. Recouvrement selon l'une quelconque des revendications 1 à 4, **caractérisé en ce que** le recouvrement (7) est attaché au hayon arrière (8) par des éléments de traction (13) sur son bord arrière (12), indépendamment de sa position de montage (7a, 7b).

6. Recouvrement selon l'une quelconque des revendications 1 à 5, **caractérisé en ce que** le recouvrement (7) présente au moins un creux (14) en forme de cuvette.

7. Recouvrement selon l'une quelconque des revendications 1 à 6, **caractérisé en ce que** le recouvrement (7) est apte à pivoter autour de son bord avant (9) d'environ 35° par rapport au hayon arrière (8) fermé, lorsque le hayon arrière (8) est ouvert.

8. Recouvrement selon l'une quelconque des revendications 1 à 7, **caractérisé en ce que**, lorsque le hayon arrière (8) est ouvert et que le recouvrement (7) est relevé, une ouverture de chargement présente une largeur libre d'au moins 580 mm.
